# EUROPEAN PATENT SPECIFICATION

(11) **EP 3 701 708 B1**
(45) Date of publication and mention of the grant of the patent: **19.10.2022**
(21) Application number: 18759776.0
(22) Date of filing: 26.07.2018
(51) Int. Cl.: G06F 15/76, G06N 3/02, G06N 20/00, H04M 1/72403, H04M 1/2755, H04M 1/72454, G06N 3/04, G06N 5/00, G06N 7/00

(54) **MACHINE DIAGNOSIS USING MOBILE DEVICES AND CLOUD COMPUTERS**
MASCHINENDIAGNOSE MITTELS MOBILER GERÄTE UND CLOUD-RECHNER
DIAGNOSTIC DE MACHINE À L'AIDE DE DISPOSITIFS MOBILES ET D'ORDINATEURS EN NUAGE

(30) Priority: 27.11.2017 US 201762590741 P
(43) Date of publication of application: 02.09.2020
(73) Proprietor: Siemens Aktiengesellschaft, 80333 München (DE)
(72) Inventor: CLAUSSEN, Heiko, North Brunswick, New Jersey 08902 (US); KURUGANTY, Phani Ram Kumar, Robbinsville, New Jersey 08691 (US); CUI, Tao, Princeton Junction, New Jersey 08550 (US); STRUCK, Günter, 45136 Essen (DE)
(74) Representative: Isarpatent
(86) International application number: PCT/US2018/043797
(87) International publication number: WO 2019/103767

(56) References cited:
- WO-A1-2017/201345
- US-A1- 2009 156 199
- US-A1- 2013 030 765
- US-A1- 2014 263 607
- US-A1- 2017 178 311
- Anonymous: "Supervised learning - Wikipedia", , 4 August 2016 (2016-08-04), XP055378466, Retrieved from the Internet: URL:https://en.wikipedia.org/w/index.php?t itle=Supervised_learning&oldid=733041029 [retrieved on 2017-06-02]

## Description

The following disclosure relates to diagnosing a machine using portable intelligent devices and cloud computers.

### BACKGROUND

Machines may require regular maintenance. Diagnosis of an operating state of the machine may be performed to plan the maintenance. Machines that are out of tune may need to be tuned to operate at an optimal state. A particular machine may have specific issues or operating characteristics that are different from other machines of the same type, class, or model.

Machines may be present in a variety of residential, commercial, and industrial environments. Expert operators may travel to the machines to repair or tune the machines or may guide another operator in repair and tuning through a remote connection.

Patent Literature US2017/178311 A1 provides a method and system of on spot diagnosis of one or more issues associated with a machine including collecting sound data and image data associated with a machine through a mobile device and transmitting them to a cloud server over a communications network. Patent Literature WO 2017/201345 A1 provides an equipment performance modeling platform applying statistical and self-adapting processes to received sensor data to provide specific equipment insights and diagnostics. Patent Literature US 2013/030765 A1 provides a system for monitoring a machine used in an industrial facility, performing analysis of operational measurements of the machine to generate preset full spectrum data set and determining variation between preset and specific full spectrum data sets.

### SUMMARY

According to the present invention, a method for determining an operating state of a machine, as defined by independent claim 1, is provided.

According to the present invention, a mobile device for determining an operating state of a machine, as defined in independent claim 8, is provided.

### BRIEF DESCRIPTION OF THE DRAWINGS

Exemplary embodiments of the present invention are described herein with reference to the following drawings.
Figure 1 illustrates an example system for determining an operating state of a machine.
Figure 2 illustrates an example technique for diagnosing and tuning a machine.
Figure 3 illustrates an example system for training a classifier and determining the state of a machine.
Figure 4 illustrates an example mobile device.
Figure 5 illustrates an example technique for training a classifier.
Figure 6 illustrates an example technique for determining the operating state of a machine.

### DETAILED DESCRIPTION

An expert human operator may manually diagnose or manually tune a machine. The expert may look, listen, and feel the operation of the machine to determine the operating state of the machine. The operator may be physically present near the machine or via telepresence to examine or adjust the machine. For example, in a "human in the loop" feedback process, an expert may examine operating parameters of a motor drive, such as the noise or vibration emitted, to determine whether or not the motor is in good condition (e.g., at a normal operating state) or needs maintenance (e.g., lubrication). In another example, the expert may change parameters of a gas burner, such as the gas flow rate or air/fuel mixture, and examine a change in the operating parameters, such as noise or color of a flame, to determine whether or not the burner is operating in its optimal state.

The expert operator may learn the unique behavior (e.g. noises, shakes, smells) of the machine in an operating condition, but transferring such knowledge between shifts or to new operators may be challenging or time-consuming. Using an expert to diagnose or tune machines remotely or on site may be expensive. The machine may be located in a remote area that is hard to access physically or with limited connectivity to the internet or other communication channels for remote access by the expert. The maintenance or tuning (and assessment of the operating state) may need to be performed in real time, where large delays or offline operation may negatively affect the result of the maintenance or tuning. When the machine is produced in small quantities, there may be few experts available to tune, diagnose, or train other operators. Machines that run on a 24-hour schedule may always require an expert to be on-call.

Diagnosis and tuning of machines may be performed by human expert operators, but at great cost and with low availability. While the expert operators may perform diagnosis and tuning remotely, machines may be located in areas with restrictions on data usage or remote access (e.g. due to security). Further, because remote presence of the expert operators still requires an expert operator to be present on one end of the remote connection, remote presence may have the same availability and cost issues as having the expert operators present at the machine in-person. Still further, remote access may fail to meet real-time requirements of diagnosis and tuning. For example, it may be difficult for an expert operator using remote access to listen to the noise of a burner while tuning the parameter of the burner.

An expert operator may use a mobile device (e.g. a smartphone, smart device, intelligent device, or portable computer) to record relevant data of a machine to be diagnosed or tuned. The mobile device may record a sound, a vibration, a magnetic field, a temperature, or an image of the machine with a microphone, an accelerometer, a magnetometer, a thermometer, a thermal imager, or a camera that is part of or in communication with the mobile device. The expert operator may also input to the mobile device an assessment of the operating state of the machine as a label associated with the recorded signal(s). For example, the expert operator may label the signal as being associated with the normal operating state of the machine, or a state in which the machine needs maintenance (e.g. lubrication) or other servicing. The expert operator may also input a unique identification code of the machine that may allow the recorded signal and label to be associated with the particular machine.

The signal, label, and identification code may be transferred to a remote computer (e.g. a networked server or a cloud computer). The remote computer may train a classifier or machine learning model by applying the signal, label, and identification code to the classifier or machine learning model. When trained, the classifier or machine learning model may be able to generate a label for an input signal that was not one of the signals used to train the classifier or model (e.g. an "unseen" signal).

Once trained, the classifier or machine learning model may be transferred to the mobile device (or another device) for diagnosis and tuning. An operator (not necessarily an expert operator) may use the mobile device for diagnosis and tuning of machines in real time. The operator may input the type, kind, model, or unique identification code to the mobile device. For example, the operator may enter this information by providing an identifier code, by scanning of a barcode on the device, by localization of the device and point of view in the room, or by visually recognizing the device through a camera video. If the trained classifier or machine learning model is available for the machine identified by the input, the mobile device may load the trained classifier or model. The operator may begin diagnosis or tuning of the machine by using a sensor in communication with the mobile device to record a signal from the machine. The mobile device may input the signal to the trained classifier or machine learning model to generate a label for the operating state of the machine based on the expert assessments of signals during training. The trained classifier or model may generate the label of the operating state without a connection to the remote computer, so the operating state may be determined in real time without further data transfer with the remote computer. When the label indicates an abnormal operating state of the machine, the label (e.g. in connection with the unique identifier) may be used to retrieve information about how to fix, maintain, or tune the machine (e.g. to restore a normal operating state). For tuning, the operator may change a parameter of the machine and measure another signal of the machine to a receive a fitness indicator of the two operating states. The fitness indicator may be an indicator of the tuning of the machine. In some cases, the fitness indicator may be the difference or similarity between a signal or operating state of the machine and a 'ground truth' signal or operating state of a tuned machine. For example, the operator may initially receive a fitness indicator of 60% showing the observed signal is significantly different from the correctly tuned ground truth for the device. When changing a parameter, the fitness indicator may lower to 58%, thus indicating that the parameter change was in the wrong direction. Changing the parameter in another direction may result in the fitness indicator increasing to 92%, indicating a signal or machine state that is similar to the ground truth. When a further change of the parameter reduces the fitness indicator again, the optimal setting for this parameter may have been achieved by the previous setting. In a second optimization step another parameter of the machine can be modified to potentially further increase the fitness indicator. When reaching a high fitness indication (e.g., above 90%), the device may be considered well-tuned. In this way, the operator may iteratively tune the machine until it reaches a desired or normal operating state. The operator may tune or maintain the machine without the real-time actual or remote presence of an expert. The sensor and classifier or machine learning model may be deployed on a cell phone, allowing for a non-expert to diagnose and tune machine in a remote location immediately without flying in an expert. Additionally, the recorded signal, label, and unique identifier may be shared with other devices (e.g. of a service team) for insight and recommendations from other operators regarding maintenance of the machine.

The recorded signals, labels, and unique identifier of the machine may be stored and used to train a classifier or machine learning model. Because of repairs performed on the machine, environmental or operating conditions, or other factors, the normal operating state of a particular machine may produce signals that are different from normal operating states of other machines of the same type, kind, or model. The record or the recorded signals, labels, and unique identifier may be uploaded to the remote computer to train, retrain, or update the classifier or model, or to train a new classifier or model for the particular machine. A new operator with no familiarity with a particular machine may confirm that the machine is operating in a normal state despite producing signals that are different from other machines (or that would indicate an abnormal operating state in another machine). Additionally or alternatively, the classifier or model trained on the data for the machine may determine a fitness indicator of a new signal based on the historical signals used to train the classifier or model. The fitness parameter may provide early warning before a breakdown by documenting a change in the signals produced over time. For example, a vibration signal may be recorded over time and a newly recorded signal given an operating state or a fitness indicator by the trained classifier or model to identify a change in a property of the vibration (e.g. an increase in intensity, magnitude, amplitude, or frequency) that may indicate a future breakdown may occur. For example, the change in the property may be an increase in a characteristic spectral band of a bearing given the number of balls in the bearing and a speed of a spindle. A trend of the increase in increase may be used to predict (e.g., based on physical models) when the bearing will need replacement. Similar trends may be monitored by using physical models or statistical failure data from one or more similar devices in the field.

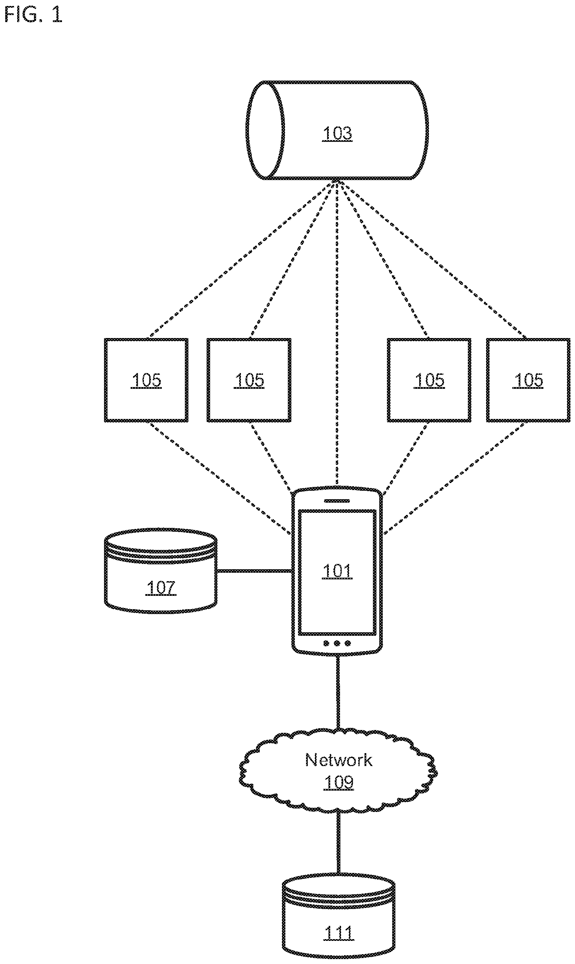

Figure 1 illustrates an example system for determining an operating state of a machine. The system includes a mobile device 101 and a machine 103 for which an operating state is to be determined. The mobile device 101 may be a cell phone, smart phone, portable computer, or other portable device. The mobile device 101 may be in communication with one or more sensors 105 and a data store 107. The sensor 105 may be part of, connected to, or remote from the mobile device 101. The mobile device 101 may connect to a network 109 and communicate with a remote computer 111. The remote computer 111 may be a cloud computer, a local fog computer, a remote data store, a server, or another computing device.

The mobile device 101 may be placed in proximity to the machine 103 to measure one or more signals of the machine 103. Additionally or alternatively, the sensor 105 may be brought in proximity of the machine 103 to measure the signal. The signal may be a measurement of a sound, a vibration, a magnetic field, a temperature, or an image of the machine as measured by a sensor 105 such as a microphone, an accelerometer, a magnetometer, a thermometer, a thermal imager, a visible light camera, an acoustic camera, a pressure sensor, a barometer, a gyroscope, a geomagnetic sensor, a hall effect sensor, or a proximity sensor.

The mobile device 101 or the sensor 105 may also scan a unique identifier (e.g. a bar code, a quick response (QR) code, or another identifier) of the machine 103. In some cases, the unique identifier may be a physical attribute of the machine 103, such as a color, position (e.g. coordinates), or other attribute. Additionally or alternatively, the operator may enter the unique identifier of the machine 103 into the mobile device 101. The mobile device 101 may use the unique identifier to select a classifier or machine learning model that is adapted to the machine 103. For example, the mobile device 101 may use the unique identifier to look up in a table one or more adapted classifiers or machine learning models suitable for the machine 103 and select the classifier or model based on the table. The selected classifier or model may be adapted to the type, class, or kind of the machine 103. For example, the adapted classifier or model may be trained on signals and labels from machines of the same type, class, or kind of the machine 103 Additionally or alternatively, the selected classifier or model may be adapted to the specific machine 103. For example, the selected classifier or model may be trained on signals and labels from the machine 103.

The machine 103 may be any whole or part of machinery that generates a signal that may be measured by a sensor 105. For example, the machine 103 may be a motor drive, motor bearing, gas burner, furnace, or other equipment. The machine 103 may generate one or more signals that may be measured by the sensors 105. For example, the machine may create noise, vibrations, or magnetic field during operation that may be measured by the sensors 105. In another example, the machine 103 may have a temperature, color, shape, or appearance that is measurable or may be sensed by the sensors 105. Additionally or alternatively, an input or output of the machine 103 may generate the signal. For example, a fluid flowing through the machine 103 generates a signal that may be measured by the sensors 105. In another example, an output shaft of the machine may generate a signal that may be measured by the sensors 105.

The sensor 105 may be configured to measure a signal of the machine 103 and to communicate the signal with the mobile device 101. The sensor 105 may be remote from and in communication with the mobile device 101. For example, the sensor 105 may be handheld or adapted to be placed on or near the machine 103. In another example, the sensor 105 is a sensor integrated with or a part of the machine 103. The sensor 105 may be a pressure, temperature, or flow rate sensor located within an enclosed device, for example, in an explosion-proof environment. The sensor 105 may communicate with the mobile device 101 through a wired or wireless connection. For example, the sensor 105 may communicate with the mobile device 105 through a Wi-Fi, Bluetooth, infrared, or other short or long range wireless connection. The sensor 105 may be configured to measure the signal for a length of time. For example, the sensor may measure the signal for 5 seconds, 60 seconds, or another length of time.

The sensor 105 may be a microphone. In some cases, the microphone may be integrated with the mobile device 101. In other cases, the microphone may be external to the mobile device 101. For example, the microphone may be external to the mobile device 101 and communicate through a wired or wireless connection. The microphone may be configured to measure a sound produced by the machine 103. For example, the microphone may measure the noises produced while the machine 103 is running. Multiple microphones may be present. For example, a first microphone may be used to measure a desired sound (e.g. a sound produced by the machine 103) and a second microphone may measure the ambient, background, or environmental sounds. Additionally or alternatively, multiple microphones may be used for beamforming. For example, multiple microphones may allow for focusing only in directions of interest for the monitoring, thereby reducing distortions from other sound sources. The mobile device 101 may reduce noise in the recorded signal by removing any of the ambient, background, or environmental noise in the sound recorded by the first microphone. The signal generated by the microphone may be a measure of the deflection of a membrane or other piece of the microphone due to the transmission of the sound waves from the machine through a medium.

The sensor 105 may be an accelerometer. In some cases, the accelerometer may be integrated with the mobile device 101. For example, the accelerometer may be built into the mobile device 101 such that the accelerometer measures a vibration of the machine 103 when placed on, near, or in the vicinity of the machine 103. In other cases, the accelerometer may be external to the mobile device 101. The signal generated by the accelerometer may be a measure of the deflection of the accelerometer due to the vibration caused by the machine.

The sensor 105 may be a magnetometer. In some cases, the magnetometer may be integrated with the mobile device 101. For example, the effect of a magnetic field on a component of the mobile device may be used to measure the strength or another property of a magnetic field generated by the machine 103. In other cases, the magnetometer may be external to the mobile device 101. For example, an external magnetometer may allow for measurement of high-strength magnetic fields that may be harmful to operators or to the mobile device 101. The magnetometer may measure the magnetic field strength at a particular distance to the machine 101. For example, the signal may include a measurement of the field strength and a value of a distance from the site of the measurement to the machine 103. The signal generated by the magnetometer may be a measure of the force exerted on the magnetometer by an external magnetic field.

The sensor 105 may be a thermometer. In some cases, the thermometer may be integrated with the mobile device 101. In other cases, the thermometer may be external to the mobile device. For example, a temperature probe may measure a temperature of the machine 103 and transmit the temperature to the mobile device. In some cases, the signal generated by the thermometer may be a measure of the mean kinetic energy present in a material of the machine. In other cases, the signal generated by the thermometer may be a measure of a voltage that is dependent on a temperature of the thermometer. For example, the thermometer may be a thermocouple.

The sensor 105 may be a thermal or infrared imager. The imager may be configured to measure thermal or infrared radiation from the machine 103. The imager may transmit an image including temperature information to the mobile device 101. The temperature information may be spatially resolved. The thermal or infrared imager may generate an image that includes a spatially-resolved measurement of the intensity of infrared radiation generated by the machine.

The sensor 105 may be an acoustic camera. The sensor 105 may be configured to measure the special pattern of the time-frequency acoustic emissions of a larger device with multiple components. For example, the machine 103 may be a boiler feed pump that includes components such as a pump, a motor, bearings, and valves. Each part may have its own time frequency characteristic for a particular mode of operation. The acoustic camera may be able to detect, differentiate, and track the components and their respective emissions (e.g. time frequency characteristics, sounds, or signals), for example, using an image segmentation approach. The acoustic camera may allow for each component to be separately modeled and monitored. When an abnormal signal is detected, the system may automatically identify the component of the machine that emitted the abnormal signal.

The sensor 105 may be a visible light camera. In some cases, the camera may be a part of the mobile device. For example, the camera may be a front or rear-facing camera of the mobile device 101. In other cases, the camera may be remote from and in communication with the mobile device 101. The camera may be configured to capture an image of the machine 103. One or more cameras may capture multiple images of the machine 103. The mobile device 101 may combine or process the images. For example, an image may be processed to remove noise or to isolate part or all of the machine 103. In another example, multiple images are combined to determine depth information in the images. The depth information may be added to each pixel. At each pixel of an image generated by the camera, the camera may store a measure of an intensity of visible light reflected or radiated by the machine and, in some cases, a color value.

The mobile device may receive more than one measurement from the sensors 105. For example, the mobile device may receive a thermal image from a thermal camera and an image (e.g. in the visible light spectrum) from a camera. The signals may be combined or processed. For example, the mobile device 101 may overlay the thermal image on the image from the camera. The combined or processed signal may form the input to the classifier or machine learning model.

The data store 107 may be a memory module of the mobile device 101. The trained classifier or machine learning model may be stored on the data store 107. The store may host multiple trained classifiers and models. The mobile device may select a particular classifier or model based on a received signal measurement or on a unique identifier of the machine 103. The data store 107 may provide the selected classifier or model to the mobile device 101. In some cases, snippets, patches, or pieces of abnormal data may be stored on the data store 107 for future analysis. In some other cases, data snippets may be stored at various times on the data store 107, allowing for trend analysis of the operating condition of the machine 103.

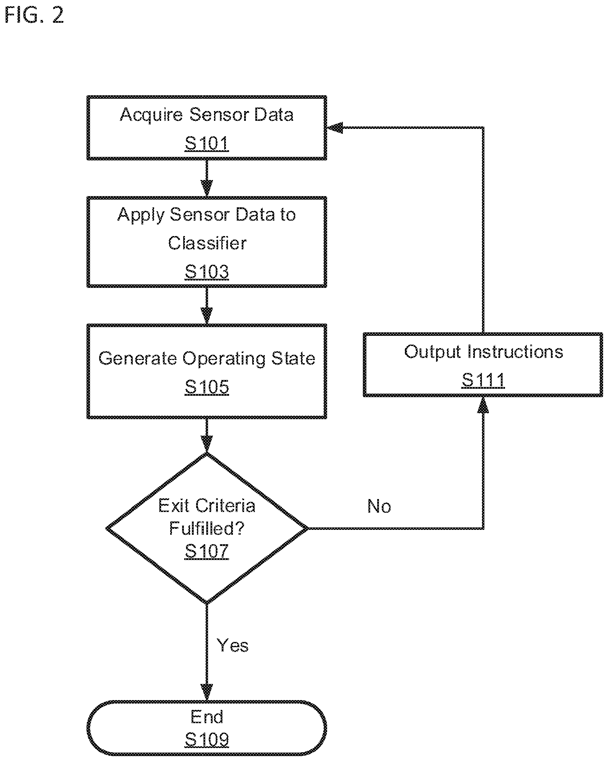

Figure 2 illustrates an example technique for diagnosing and tuning a machine. Additional, different, or fewer acts may be provided. For example, acts S107 and S109 may be omitted. The acts may be performed in any order. For example, act S111 may proceed directly from act S105. The acts may be performed by a processor coupled to a memory. The acts may comprise instructions stored in memory that, when executed, cause the processor to carry out the acts. According to the invention as claimed, the mobile device 101 has a processor with memory coupled thereto configured to perform the acts.

At act S101, sensor data is acquired. Sensor data may be acquired from sensors that are a part of or external to a mobile device. The sensor data include a measurement of a signal or property of a machine. For example, the signal data may include a measurement of a sound, a vibration, a magnetic field, a temperature, or an image of the machine.

At act S103, the sensor data is applied to a machine-trained classifier or machine learning model. The trained classifier or model may have been trained on a set of input sensor data and associated operating states of machines. For example, the training of sensor data may include signals of a machine measured by a mobile device and operating states assessed by an expert operator. A processor applies the sensor data to the trained classifier or model.

At act S105, an operating state is generated for the sensor data applied to the trained classifier or model. The operating state may be the output of the trained classifier or model. The operating state may describe the operation of the machine when it generated the signal measured by the sensor data. For example, the operating state may indicate that the machine is at a normal operating state or abnormal operating state. In some cases, more than one abnormal operating state may exist. For example, the abnormal operating state may describe a severity of the abnormality such as minor abnormal operation or sever abnormal operation.

At act S107, exit criteria are examined for fulfillment. The exit criteria may be a minimum operating state. For example, the exit criteria may specify that a normal or minor abnormal state must be generated to fulfill the exit criteria. Additionally or alternatively, the exit criteria may be a minimum or maximum number of iterations through the process. In some cases, the process may repeat where exit criteria are not fulfilled. For example, where an operator is tuning a machine for optimal or normal operation, the operator may determine that a machine is in an abnormal operating state and may adjust a parameter of the machine. The operating state of the machine with the adjusted parameter may be determined again based on new sensor data. The process may repeat until normal operation of the machine is achieved. The exit criteria may be a minimum operating state.

In act S109, the process may end when the exit criteria are fulfilled. Additionally or alternatively, the process may end after a single iteration.

In act S111, instructions are output. The instructions may contain information on performing repair, maintenance, or tuning of the machine. In some cases, the instructions may be generic to a class, type, kind, or model of the machine. In other cases, the instructions may be specific to the particular machine. The instructions may be based on a unique identifier of the machine.

A repair, maintenance operation, or tuning operation may be performed on the machine. For example, an operator may attempt to fix the machine based on the instructions output in act S111. The repair or operation may involve changing a parameter of the machine. For example, the air/fuel ratio or gas flow rate of a burner may be adjusted according to the instructions.

When the repair or operation is performed, new sensor data may be acquired in act S101. The new sensor data may be applied to the trained classifier or model in act S103 and an updated operating state of the machine may be generated in act S105. The exit criteria (e.g. the machine operating at a normal operating state) may be checked in act S107 to verify that the repair or operation restored the operation of the machine. If the repair or operation did not sufficiently fix the machine, another iteration may be performed. In some cases, new instructions are not output in act S111 after the first iteration. In other cases, new instructions are output in act S111. For example, the instructions may step through a fault tree and identify other components for an operator to check, repair, or adjust.

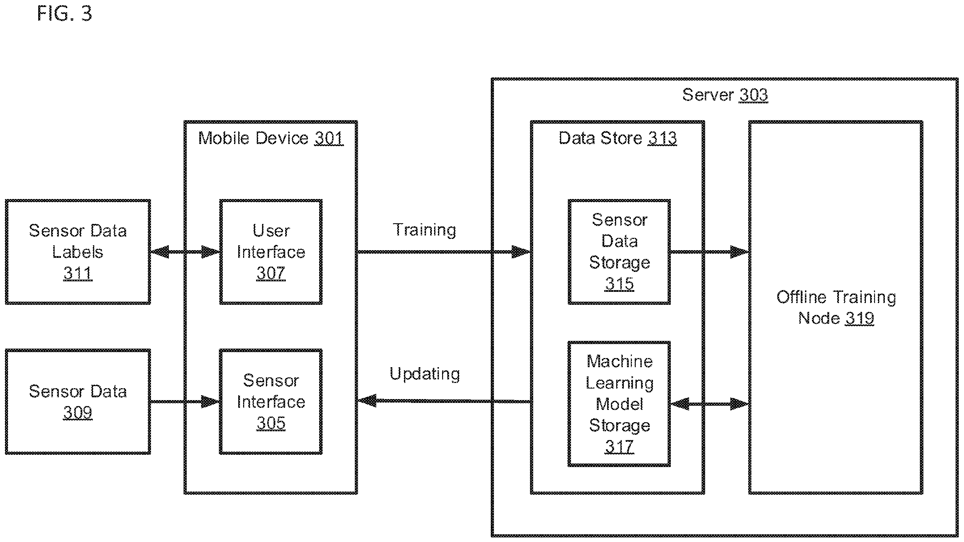

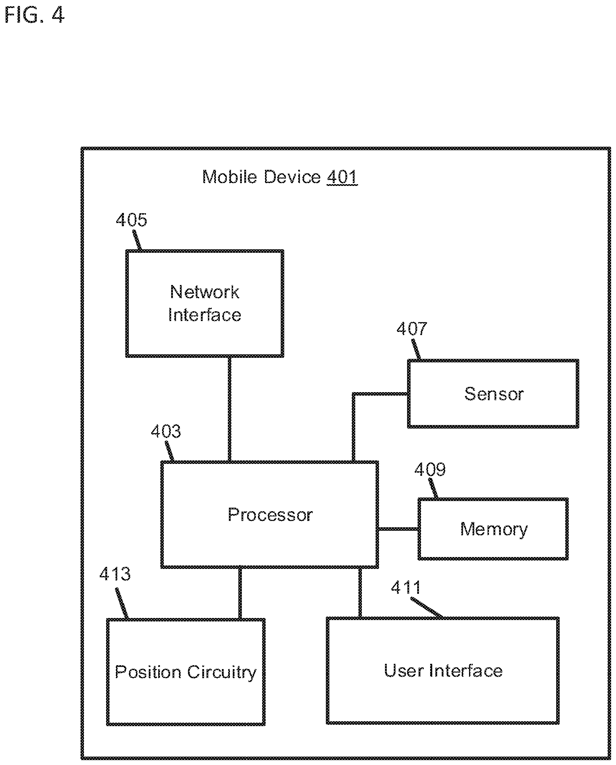

Figure 3 illustrates an example system for training a classifier and determining the state of a machine. The system includes a mobile device 301 in communication with a server 303. The mobile device 301 may be the mobile device 101 of Figure 1 or the mobile device 401 of Figure 4. The server 303 may be the remote computer 111. The communication may traverse a network connection such as the network 109.

The mobile device 301 may have a sensor interface 305 and a user interface 307. The sensor interface 305 may be configured to accept, require, or retrieve sensor data 309. One or more sensors 105 may generate the sensor data. The sensor data 309 may be a measure of a signal or property of a machine. In some cases, the sensor data 309 may include a unique identifier of the machine. In some other cases, the sensor data 309 may be generated within the mobile device 301, for example, as part of an off-the-shelf integrated sensor set. The user interface 305 may accept input from and display information to a user or operator. The user interface 305 may be configured to accept sensor data labels 311. The labels 311 may indicate an operating state of the machine when the sensor data was generated.

During training of a classifier or machine-learning model, sensor data 309 is acquired by the sensor interface 305. The sensor interface may communicate with the sensors. The sensor interface 305 may include amplifiers and other circuitry components. The sensor interface 305 may include software components. The software components may be instructions that are executable by a generic or application specific processor to implement the sensor interface.

A user (e.g. an expert operator) may label the sensor data 309 with the user interface 307. For example, each piece of sensor data 309, or sets of sensor data 309, may be assigned a data label 311 by the expert operator. The sensor data labels 311 may indicate an operating state of the machine when the sensor data 309 was acquired. For example, the sensor data labels 311 may indicate a normal or abnormal operating state of the machine. In another example, the sensor data 309 may indicate that the machine needs specific servicing. The sensor data 309 and associated labels 311 may be transferred to the server 303.

The server 303 may include a data store 313 and an offline training node 319. The data store 313 may include sensor data storage 315 and machine learning model storage 317. The data store 313 and offline training node 319 may be implemented by a processor coupled to a memory. For example, the data store 313 may store the information for the sensor data storage 315 and the machine learning model storage 317. A processor of the server 303 may transfer data into and out of the data store 313. In another example, the offline training node 319 may include instructions that are executable by an application specific or generic processor of the server 303 to implement the offline training node 319.

During training, the data store 313 may receive the sensor data 309 and the associated labels 311. In some cases, the sensor data storage 315 may store the sensor data 309 and the associated labels 311. The server 303 may implement access control to protect the stored sensor data 309, labels 311, and classifiers or machine learning models. Access control may ensure that only authorized mobile devices or users may access the contents stored on the server 303.

In order to train a classifier or machine learning model, the offline training node 319 may recall a classifier or model from the machine learning model storage 317 and sensor data 309 and labels 311 from the sensor data storage 315. In some cases, the classifier or model may be untrained.

The offline training node 319 trains the classifier or model by applying pairs of the sensor data 309 and the associated label 311. By applying the pairs of data 309 and labels 311, the classifier or model learns to map an input piece of sensor data 309 with an output label 311 of an operating state of the machine. The offline training node 319 may use one or more techniques to train the classifier or machine learning model. For example the offline training node 319 may use mutual interdependence analysis (MIA) or a multivariate gaussian mixture model (MGMM). In some cases, MIA may be used to process the input to the classifier or machine learning model. For example, MIA may extract an optimal representation of the input sensor data. That is, MIA extracts a high dimensional common representation from a set of input representations such as a set of power spectral densities from normal mode of operation of the device. In other cases, MGMM may be used to process the input to the classifier or machine learning model. For example, MGMM may break the input sensor data into segments or patches, fit the input to a model, and use the fitted model as the input to the classifier or machine learning model. Other models may include deep neural network classifiers, random forest classifiers, or temporal models such as recursive neural networks or hidden markov models. Once trained, the trained classifier or machine learning model may be transferred to the machine learning model storage 317.

The trained classifier or model may be stored with meta information describing the training data set. In some cases, the meta data includes a type, kind, model, or unique identifier of the one or more machines that generated the signal measured by the sensor data 309. This may allow the trained classifier or model to be used on similar machines to generate operating states based on sensor data 309 and labels 311 that were not part of the training set. Using a classifier or model that was trained on data from a machine that is similar to a second machine that it to be diagnosed or tuned may increase the accuracy of a generated operating state of the second machine.

The trained classifier or model is transferred to the mobile device 301. The trained classifier or model may be transferred prior to diagnosing or tuning a machine. According to the invention as claimed, the recording of the sensor data 309 and the labels 311 (e.g., and the unique identifier) is performed on the mobile device 301, the training is performed remotely by the server 303, and the determination of the operating state of the machine is performed on the mobile device 301 without any further data transfer (without a connection between the mobile device 301 and server 303). On the mobile device 301, the trained classifier or model may be used to determine an operating state of another machine. Because the trained classifier or model is stored local to the mobile device 301, the operating state of another machine is generated in real time without additional communication with the server 303. Where the mobile device 301 connects to and disconnects from the server 303, the one or more trained classifiers or models stored thereon may be periodically updated or new trained classifiers or models added.

In an example, to generate an operating state of a machine, a user may input a type, make, or model of the machine to be diagnosed or tuned. The mobile device 301 may determine whether or not a trained classifier or model is available for the particular type or kind of machine based on the input. When the trained classifier or model is available for the machine, the mobile device 301 may load the trained classifier or model. In some cases, where a trained classifier or model is available for the particular machine, but the trained classifier or model is not stored on the mobile device 301 but on the machine learning model storage 317, the mobile device 301 may request and download the appropriate trained classifier or model. With the trained classifier or model loaded, the operator may start the diagnosis or tuning of the machine. Sensor of the mobile device 301 may generate sensor data 309 based on the operation of the machine. The mobile device 301 the inputs the sensor data 309 into the loaded classifier or machine learned model. The output of the trained classifier or model is a label of an operating state of the machine corresponding to the labels assessed by the expert during the training process of the classifier or model. Additionally or alternatively, a fitness indicator may be output that represents the similarity of the sensor data 309 with the normal operating state or optimally tuned state of the machine. The fitness parameter may be represented, for example, as a percentage fit. During real-time diagnosis or tuning of a machine, the mobile device 301 may perform the determination of the operating state without a connection to the server 303. Determination of operating states without a connection to the server (or, e.g., the internet) may be possible because the input sensor data 309 and associated label 311 are encoded in the trained classifier or model that was loaded on the mobile device 301 before the diagnosis or tuning.

Figure 4 illustrates an example mobile device 401. The mobile device 401 includes a processor 403 in connection with a network interface 405, a sensor 407, memory 409, a user interface 411, and position circuitry 413. The mobile device 401 may lack position circuitry 413.

The mobile device 401 may be a cell phone, smart phone, mobile computer, or other mobile or portable computing device. The mobile device 401 may be reconfigurable. For example, an application may be loaded on the mobile device 401 that performs diagnosis or tuning of a machine (e.g. the method of Figure 2).

The processor 403 may execute instructions and implement applications. The processor 403 may be a general or application specific processor. The processor 403 may be coupled to the memory 409. The processor 403 may be configured to compare an operating state of the machine to an altered, desired, or normal operating state of the machine. For example, during tuning, the processor 403 may compare the present operating state of the machine to an altered or normal state of the machine to determine whether or not the machine is operating at the altered or normal state and, ultimately, whether or not another iteration of the tuning process may be performed.

The processor 403 is configured to retrieve a classifier or machine learning model trained on the historical performance of the machine. The historical performance may include previous signals of the machine. The processor 403 is configured to apply a presently measured signal of the machine to the classifier or model trained on the historical record for the machine. The applying may generate a fitness indicator indicating a similarity or difference between the present signal or operating state of the machine and a historic signal or operating state of the machine in normal or tuned operation. In this way, a change in the fitness parameter may indicate a breakdown of the machine may be likely to occur or that the machine is out of tune. For example, where a vibration of the machine has grown over time according to the historical record, a trend of decreasing fitness parameters may indicate that the machine is likely to fail. The actual value of the vibration signal may still remain classified as normal behavior by the trained classifier or model while the trend or amount of change in the fitness parameter, over time, may indicate a failure may occur..

The network interface 405 may allow for communication between the mobile device 401 and resources on the network such as servers, remote computers, or cloud computers. The network interface may include ports for connecting to the network, signal amplifiers, digital to analog converters, and analog to digital converters. Additionally or alternatively, the network interface 405 may include instructions executable by the processor 403 to implement the network interface 405. The instructions may be stored in the memory 409. In some cases, the network interface 405 may facilitate communications between the mobile device 401 and a server (e.g. the remote computer 111). The network interface may be in communication with the network 109. The network interface 405 may facilitate transmission of the machine signals and associated labels to the server during training of the neural network. The server may send the trained classifier or machine learning model to the mobile device 401 through the network interface 405.

The sensor 407 is configured to measure a signal or a property of a machine. The sensor 407 may be part of or remote from the mobile device 401 and the processor 403. For example, the connection between the sensor 407 and the processor 403 may be wired, wireless, or a combination of wired and wireless. The sensor 407 may be configured to take successive measurements of the machine. For example, where the machine is being tuned, the sensor 407 may record or measure a signal or property of the machine at each iteration of the tuning process. The sensor 407 may take the measurement before or after a parameter of the machine has been adjusted. Where the tuning process has not resulted in a desired or normal operating state of the machine, the sensor 407 may take a second, third, or more measurements.

The memory 409 may be coupled with the processor 403. The memory 409 may store instructions and a trained classifier or machine learning model. The trained classifier or model is stored in the memory 409 and be configured to map an input to an output. For example, the trained classifier or model may be trained to take as input a signal or measurement recorded by the sensor 407 and to output an associated operating state of the machine. The classifier or machine learning model is trained based on a plurality of machine signals or properties and associated operating states of the machine (e.g. as assessed by an expert operator). In a tuning process, the trained classifier or model may be configured to generate further operating states based on the updated signal recorded by the sensor 407.

The instructions stored by the memory 409 may be stored or organized in an instruction library. The instruction library may contain instructions to transition the machine from a current (e.g. an abnormal state) to an altered (e.g. normal) operating state. For example, the instruction library may contain manuals, instructions, or other documents in information to aid an operator in repairing or tuning the machine. The instructions may be tied to defined classes, kinds, types, or models of machines. Additionally or alternatively, the instructions in the library may be tied to or associated with a unique identifier of the machine.

The user interface 411 may be configured to accept user input and to display information. For example, the user interface may include one or more of a keyboard, a display, and a touchscreen. The user interface 411 may be configured to display or output the operating state of the machine. For example, the user interface may display a warning when the operating state of the machine is abnormal or deviates from historical signals and states of the machine as indicated by a fitness indicator. Additionally or alternatively, the user interface 411 may be configured to display instructions for changing the state of the machine. For example, the user interface may display a manual with instructions to aid an operator in fixing or tuning the machine.

The position circuitry 413 may be configured to determine a position of the mobile device 401. The position circuitry may include amplifiers, correlators, a clock, or other components. The position circuitry 413 may be in communication with a global navigation satellite system (GNSS) for positioning. For example, the position circuitry 413 may communicate with one or more global positioning system (GPS) satellites to determine the position of the mobile device 401. The position of the mobile device 401 may be used as a unique identifier of the machine. For example, where the mobile device 401 is in the proximity of the machine, the location of the mobile device 401 may be close to the location of the machine, and the location of the mobile device may be used to determine the specific machine (e.g. as compared to a similar machine in a different location).

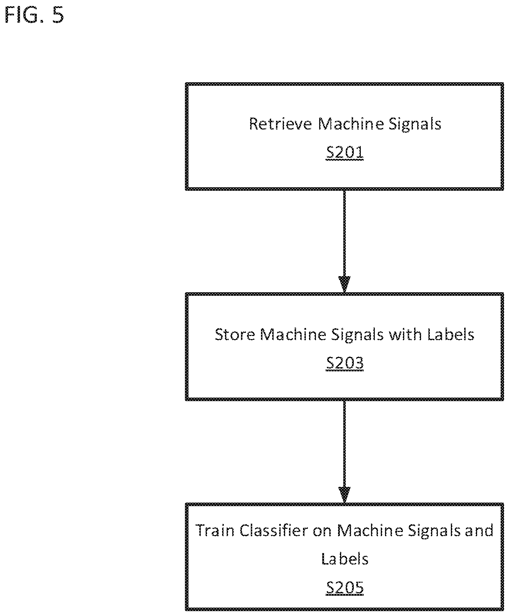

Figure 5 illustrates an example technique for training a classifier or machine learning model. According to the invention as claimed, the classifier is trained by a server remote from a mobile device. For example, the server 111 of Figure 1 may perform the acts to train the classifier or machine learning model.

In act S201, a processor receives a plurality of machine signals. In some cases, the processor may be a processor of the server 111. The machine signals may be generated by a sensor and sent to the processor by a mobile device in communication with the sensor. The machine signals may represent measurements taken by a sensor of signals generated by a machine during operation. For example, the signals may be measurements of sounds, vibrations, magnetic fields, temperatures, or pictures of one or more machines.

In act S203, the machine signals are stored with associated labels. The signals and associated labels may be stored in a memory coupled with the processor. The labels may be assessed for each signal by an operator. For example, an expert operator may label a machine signal as being associated with an operating state of the machine. The label may indicate a signal is associated with a normal operating state or a state in which the machine needs service (e.g. an abnormal state). The label may indicate a particular or specific service to be performed on the machine. For example, the label may indicate that the machine is in an abnormal operating state and needs a specific part serviced to restore normal operation.

The labels for the signals may be received with the signals in act S201. In some cases, the operator may label the signals on a mobile device (e.g. the mobile device that is in communication with the sensors that measured the signal) and the mobile device may transfer the signals and the associated labels to the processor. Additionally or alternatively, the labels may be added from a different location or device or received by the processor at an earlier or later time than when the machine signals are received.

The signals and labels may be stored with meta information. The meta information may include a unique identifier of the machine that generated the signals. By including the meta data with the machine signals and labels, the classifier or machine learning model trained on the signals and labels may be associated with (or adapted for) a kind, type, category, or model of machine, or with the specific machine that produced the signals.

In act S205, the processor trains the classifier or machine learning model with machine learning based on the plurality of stored machine signals and associated operating states. The processor may train the classifier or model by applying pairs of inputs and outputs. For example, the classifier or machine learning model may learn to accept as input a machine signal and to produce as output the labeled operating state associated with the machine signal. The trained classifier or model may map the machine signals to the labeled operating states of the machine. Training the classifier or model with multiple pairs of signals and labeled operating states may increase the accuracy of the classifier or model in predicting a correct operating state.

Once trained, the classifier or machine learning model may receive as input an unseen machine signal and produce or generate as output an operating state of the machine. For example, a machine signal from the same or a different machine that was not part of the machine signals used in training may be applied by a processor to the trained classifier or machine learning model. The trained classifier or model may output an operating state of the machine associated with the input machine signal based on the signals and labeled operating states used for training.

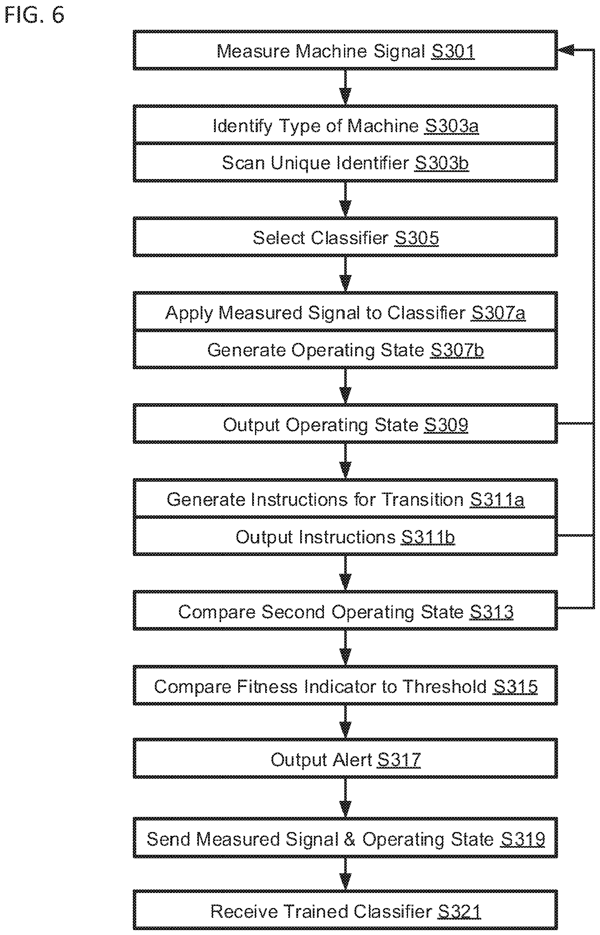

Figure 6 illustrates an example technique for determining the operating state of a machine. Additional, different, or fewer acts may be provided. For example, acts S315 and S317 may be omitted. The acts may be performed in any order. For example, act S319 may be performed before act S317. The technique may be iterative such that certain acts may be repeated. For example, acts S301, S307a, S307b, and S309 may be repeated for each iteration. Tuning the machine may require multiple iterations of acts.

The acts may be performed by a processor coupled to a memory. The acts may comprise instructions stored in memory that, when executed, cause the processor to carry out the acts. According to the invention as claimed, the mobile device 101 has a processor with memory coupled thereto configured to perform the acts.

In act S301, a signal of a machine is measured by a mobile device. The signal may be a signal produced by the machine during operation. For example, the signal may be a sound, a vibration, a magnetic field, a temperature of the machine that is measured. Additionally or alternatively, the signal may be an image in the visible, acoustic, infrared, or other light spectrum of the machine. The signal may be produced from all or a part of the machine. The signal may be measured by a sensor of the mobile device or a sensor in communication with the mobile device. For example, the signal may be measured by a microphone, an accelerometer, a magnetometer, a thermometer, a thermal imager, or a camera that is part of or external to the mobile device.

In act S303a, a type of the machine may be identified. For example, where the machine is a motor, a type of the motor may be brushed or brushless, direct or alternating current, or two or three phase power. The type may also include a model, manufacturer, or other information about the machine.

In act S303b, a unique identifier of the machine is scanned. The mobile device or a sensor in communication with the mobile device may scan the code. The unique identifier may indicate the type of machine as in act S303a. For example, the unique identifier may be a model number or serial number of the machine. The mobile device may use the unique identifier to look up more information about the machine. For example, the mobile device may use the unique identifier to look up an entry in a table that has information about the machine and about trained classifiers or machine learning models suitable or adapted to be used with the machine. In some cases, the unique identifier may be encoded. For example, the unique identifier may be a bar code, QR code, or other encoding. The mobile device may scan the bar or QR code with a camera or another sensor to decode the unique identifier. Additionally or alternatively, the unique identifier may be a position of the machine. For example, the mobile device may use the location of the machine (or a location of the mobile device in the proximity of the machine) to look up an entry in a table with information stored for the location or the machine.

In act S305, a machine learned classifier or machine learning model is selected. The mobile device stores a plurality of trained classifiers or models that are adapted to one or more machines. The mobile device may select a trained classifier or model from the plurality that is adapted to determine an operating state of the machine that is being diagnosed or tuned. A trained classifier or model may be considered adapted for a machine when the classifier or model was trained based on training signals measured from machines that are of the same type, kind, class, or model of the machine that is being diagnosed or tuned. In some cases, the adapted model or classifier may be trained based on signals that were produced by the particular machine that is being diagnosed or tuned.

In act S307a, the measured signal of the machine is applied by the processor to the trained classifier or machine learning model. The trained classifier or model is the adapted classifier or model selected in act S305. The measured signal may form the input to the trained classifier or model.

In act S307b, the operating state of the machine is generated by the processor. The operating state may be the output of the trained classifier or machine learning model based on the input signal of the machine. The operating state may indicate that the machine is operating in a normal operating condition or that the machine needs service. Additionally or alternatively, a fitness indicator may be generated that illustrates the similarity of the current recording to the ground truth, for example, a normal operating or well-tuned state of the machine used for training. The fitness indicator may be illustrated as a percentile fit to ground truth. Moreover, a real-time data representation, such as a power spectral density may be displayed, allowing an operator visual interpretation of the current signal from the machine.

In act S309, the operating state of the machine is output. In some cases, the operating state of the machine may be output to a user interface of a mobile device. For example, the operating state may be displayed on a display of the mobile device. Additionally or alternatively, the operating state may be sent to another device or computer. For example, the mobile device may send the operating state to a remote computer or to another mobile device. By sending the operating state to other devices, an operator may receive comments from other operators about the machine and the operating state.

In act S311a, the mobile device may generate or retrieve instructions. The instruction may contain information on changing a state of the machine. In some cases, the instructions will contain information on transitioning from the current state of the machine to an altered state (e.g. a normal operating state of the machine). For example, the instructions may contain directions to correct a fault in the machine. The instructions may describe parameters to change to transition to the altered state of the machine. For example, the instructions may instruct the operator to replace a bearing of a motor, adjust an air/fuel ratio of a burner, or tighten a mounting bolt of the machine. The instruction may contain a list of tools to implement the transition.

The mobile device may have a library of instructions stored in memory. The mobile device may retrieve the instructions from storage based on the unique identifier of the machine, the operating state of the machine, or both. The mobile device may generate instruction by modifying the stored instructions.

In act S311b, the instructions are output by the mobile device. In some cases, the mobile device may display the instructions with the user interface. For example, the instructions may be displayed on a display of the mobile device. In other cases, the instructions are sent to another device. Additionally or alternatively, the instructions may be acoustically synthesized. For example, the mobile device may read the instructions to the operator out loud for hands-free operation or repairs/tuning that require a different operator location to the mobile device doing the real-time classification of the machine operation.

Where an iterative diagnosis or tuning of the machine is desired, the process may repeat one or more acts. For example, after one or more of acts S309, S311a, S311b, or S313, a second machine signal may be measured in act S301. The second machine signal may be applied to the trained classifier or machine learning model in acts S307a and S307b to generate a second operating state of the machine. In some cases, an operator may tune a parameter of the machine or attempt a repair of the machine before the second signal of the machine is measured.

In act S313, the second operating state of the machine is compared to the altered state. This comparison may check whether or not the tuning or maintenance by the operator caused the machine to transition to the altered, desired, or normal operation state. When the second state does not correspond to the altered state (e.g. when the machine has not transitioned to a normal operating state), another iteration may be performed. For example, where the second operating state does not correspond to the altered state, a third signal of the machine may be measured in act S301. The operator may attempt a further tuning or repair before the third signal is measured.

In act S315, a value of the fitness indicator is compared to a threshold. The comparison may establish a deviation from a normal or tuned machine used to train the classifier or model. For example, when tuning the machine, a threshold value may be set at 90%. When the fitness parameter is at or above a value of 90%, the fitness parameter may indicate the machine is tuned. A fitness value of less than 90% may indicate that the machine is out of tune.

In act S317 the processor may output an alert based on the comparison. In some cases, the alert may warn of an impending machine failure or abnormal operating state of the machine. In other cases, the alert may indicate that the machine is tuned or out of tune. The alert may indicate a change, a difference, a similarity, or the discrepancy of the measured signal. The alert may be output when the discrepancy is above, below, or at a threshold value. For example, the alert may be output when the measured signal is more than a threshold amount more intense than a previous signal of the machine (e.g. when the machine is making a noise that is louder than a noise from the machine used to train the classifier or machine learning model). In another example, the alert may be output when a value of the fitness indicator is more than a threshold value, indicating that the machine has reached a tuned or historically normal operating state. In a further example, the alert may be output when the fitness indicator is less than a threshold value, indicating that the machine is out of tune or requires tuning. The alert may be output through a user interface of the mobile device. For example a display of the mobile device may output the alert. Additionally or alternatively, the alert may be sent to another device. For example, the alert may be transferred to another mobile device or to a remote server. The alert may notify the operator or other operators of a condition of the machine.

In act S319, the processor sends the measured signal and the operating state of the machine to a remote computer. For example, the mobile device may send the signal and the operating state (or just the measured signal and the operating state of the machine) to the server 303.

In act S321, the processor receives a trained machine-learned classifier or machine learning model. In some cases, the remote computer may retrain the classifier or model or train a new classifier or model with the measured signal and the operating state of the machine. The remote computer may send the classifier or machine learning model trained on the updated measured signal, operating state, to the mobile device.

## Claims

1. A method for determining an operating state of a machine (103), the method comprising:
measuring, with a mobile device (101, 301, 401), a signal of the machine (103);
identifying, by the mobile device (101, 301, 401), a type of the machine (103);
selecting, by the mobile device (101, 301, 401), an adapted machine-learned classifier from a plurality of machine-learned classifiers stored local to the mobile device (101, 301, 401), based on the type of the machine (103);
applying (S103), by a processor of the mobile device (101, 301, 401), the measured signal to the adapted machine-learned classifier learned on a plurality of machine signals and associated operating states;
generating (S105), by the processor of the mobile device (101, 301, 401), the operating state of the machine (103) based on the application of the measured signal to the adapted machine-learned classifier without a connection to a remote computer;
outputting, by the mobile device (101, 301, 401), the operating state of the machine (103);
sending, by the processor of the mobile device (101, 301, 401), the measured signal and operating state of the machine to the remote computer; and
receiving, by the processor of the mobile device (101, 301, 401), an updated machine-learned classifier trained in the remote computer on the measured signal and operating state of the machine (103),
wherein the processor of the mobile device (101, 301, 401) performs the applying and generating in real time.

2. The method of claim 1, wherein the signal is measured by a microphone, an accelerometer, a magnetometer, a thermometer, a thermal imager, or a camera of the mobile device (101, 301, 401).

3. The method of claim 1, wherein the signal comprises a sound measurement, a vibration measurement, a magnetic field measurement, a temperature measurement, or an image of the machine (103).

4. The method of claim 1, further comprising:
generating, by the mobile device (101, 301, 401), one or more instructions to transition from the operating state of the machine (103) to an altered state; and
outputting, by the mobile device (101, 301, 401), the one or more instructions.

5. The method of claim 4, further comprising:
measuring, by the mobile device (101, 301, 401), a second signal of the machine (103);
applying, by the processor of the mobile device (101, 301, 401), the second signal to the adapted machine-learned classifier;
generating, by the processor of the mobile device (101, 301, 401), a second operating state of the machine based on the application of the second signal to the adapted machine-learned classifier;
comparing, by the mobile device (101, 301, 401), the second operating state to the altered state; and
measuring, with the mobile device (101, 301, 401), a third signal of the machine when the second operating state does not correspond to the altered state, wherein the altered state is a normal operating state of the machine (103).

6. The method of claim 1, wherein a position of the mobile device (101, 301, 401) determined by a position circuitry (413) of the mobile device (101, 301, 401) is used as a unique identifier of the machine (103).

7. The method of claim 1, further comprising:
comparing, by the processor of the mobile device (101, 301, 401), a fitness indicator indicating a similarity or difference between the signal of the machine (103) and a historic signal of the machine (103) to a threshold value, and
outputting, by the processor of the mobile device (101, 301, 401), an alert based on the fitness indicator when the fitness indicator is above the threshold value.

8. A mobile device (101, 301, 401) for determining an operating state of a machine (103), the mobile device (101, 301, 401) comprising:
a sensor (407) configured to measure a signal of the machine (103);
a processor (403) configured to identify a type of the machine (103), select an adapted machine learned classifier from a plurality of machine-learned classifiers stored local to the mobile device (101, 301, 401), based on the type of the machine (103) and to generate the operating state of the machine (103) based on the application of the measured signal to the adapted machine-learned classifier without a connection to a remote computer;
a memory (409) having stored thereon the adapted machine-learned classifier, the adapted machine-learned classifier learned on a plurality of machine signals and associated operating states; and
a user interface (411) configured to output the operating state of the machine (103),
wherein the processor (403) is further configured to send the measured signal and operating state of the machine to the remote computer; and receive an updated machine-learned classifier trained in the remote computer on the measured signal and operating state of the machine (103),
wherein the processor (403) is configured to generate the operating state of the machine (103) in real time.

9. The mobile device (101, 301, 401) of claim 8, further comprising:
an instruction library configured to provide one or more instructions to transition from the operating state of the machine (103) to an altered state, wherein the user interface is further configured to output the one or more instructions.

10. The mobile device (101, 301, 401) of claim 9,
wherein the sensor (407) is further configured to measure a second signal of the machine (103),
wherein the adapted machine-learned classifier is further configured to generate a second operating state of the machine (103) based on the second signal,
wherein the altered state is a normal operating state of the machine (103), and
wherein the processor configured to compare the second operating state to the altered state.

11. The mobile device (101, 301, 401) of claim 8, further comprising:
a position circuitry (413) configured to determine a position of the mobile device (101, 301, 401), the position of the mobile device (101, 301, 401) being used as a unique identifier of the machine (103).

12. The mobile device (101, 301, 401) of claim 8,
wherein the processor (403) configured to compare a fitness indicator indicating a similarity or difference between the signal of the machine (103) and a historic signal of the machine (103) to a threshold, and
wherein the user interface (411) is configured to output an alert based on the comparison.

## Patentansprüche

1. Verfahren zur Bestimmung eines Betriebszustands einer Maschine (103), wobei das Verfahren umfasst:
Messen eines Signals der Maschine (103) mit einer mobilen Vorrichtung (101, 301, 401);
Identifizieren eines Typs der Maschine (103) durch die mobile Vorrichtung (101, 301, 401);
Auswählen eines angepassten maschinell erlernten Klassifikators durch die mobile Vorrichtung (101, 301, 401) aus einer Mehrzahl von maschinell erlernten Klassifikatoren, die auf der mobilen Vorrichtung (101, 301, 401) lokal gespeichert ist, basierend auf dem Typ der Maschine (103);
Anwenden (S103) des gemessenen Signals auf den angepassten maschinell erlernten Klassifikator, der bei einer Mehrzahl von Maschinensignalen und assoziierten Betriebszuständen erlernt wird, durch einen Prozessor der mobilen Vorrichtung (101, 301, 401);
Erzeugen (S105) des Betriebszustands der Maschine (103) durch den Prozessor der mobilen Vorrichtung (101, 301, 401) basierend auf der Anwendung des gemessenen Signals auf den angepassten maschinell erlernten Klassifikator ohne Verbindung zu einem Remote-Computer;
Ausgeben des Betriebszustands der Maschine (103) durch die mobile Vorrichtung (101, 301, 401);
Senden des gemessenen Signals und des Betriebszustands der Maschine durch den Prozessor der mobilen Vorrichtung (101, 301, 401) an den Remote-Computer; und
Empfangen eines aktualisierten maschinell erlernten Klassifikators, der im Remote-Computer am gemessenen Signal und dem Betriebszustand der Maschine (103) trainiert wurde, durch den Prozessor der mobilen Vorrichtung (101, 301, 401),
wobei der Prozessor der mobilen Vorrichtung (101, 301, 401) das Anwenden und Erzeugen in Echtzeit durchführt.

2. Verfahren nach Anspruch 1, wobei das Signal durch ein Mikrofon, einen Beschleunigungsmesser, ein Magnetometer, ein Thermometer, ein Wärmebildgerät oder eine Kamera der mobilen Vorrichtung (101, 301, 401) gemessen wird.

3. Verfahren nach Anspruch 1, wobei das Signal eine Schallmessung, eine Schwingungsmessung, eine Magnetfeldmessung, eine Temperaturmessung oder ein Bild der Maschine (103) umfasst.

4. Verfahren nach Anspruch 1, ferner umfassend:
Erzeugen einer oder mehrerer Anweisungen durch die mobile Vorrichtung (101, 301, 401) zum Übergehen vom Betriebszustand der Maschine (103) in einen geänderten Zustand; und
Ausgeben der einen oder der mehreren Anweisungen durch die mobile Vorrichtung (101, 301, 401).

5. Verfahren nach Anspruch 4, ferner umfassend:
Messen eines zweiten Signals der Maschine (103) durch die mobile Vorrichtung (101, 301, 401);
Anwenden des zweiten Signals durch den Prozessor der mobilen Vorrichtung (101, 301, 401) auf den angepassten maschinell erlernten Klassifikator;
Erzeugen eines zweiten Betriebszustands der Maschine (103) durch den Prozessor der mobilen Vorrichtung (101, 301, 401) basierend auf der Anwendung des zweiten Signals auf den angepassten maschinell erlernten Klassifikator;
Vergleichen des zweiten Betriebszustands durch die mobile Vorrichtung (101, 301, 401) mit dem geänderten Zustand; und
Messen eines dritten Signals der Maschine mit der mobilen Vorrichtung (101, 301, 401), wenn der zweite Betriebszustand nicht dem geänderten Betriebszustand entspricht, wobei der geänderte Zustand ein Normalbetriebszustand der Maschine (103) ist.

6. Verfahren nach Anspruch 1, wobei eine Position der mobilen Vorrichtung (101, 301, 401), die durch eine Positionsschaltungsanordnung (413) der mobile Vorrichtung (101, 301, 401) bestimmt wird, als eine eindeutige Kennung der Maschine (103) verwendet wird.

7. Verfahren nach Anspruch 1, ferner umfassend:
Vergleichen eines Eignungsindikators, der eine Ähnlichkeit oder einen Unterschied zwischen dem Signal der Maschine (103) und einem historischen Signal der Maschine (103) angibt, durch den Prozessor der mobilen Vorrichtung (101, 301, 401) mit einem Schwellenwert, und
Ausgeben einer Warnung durch den Prozessor der mobilen Vorrichtung (101, 301, 401) basierend auf dem Eignungsindikator, wenn der Eignungsindikator über dem Schwellenwert ist.

8. Mobile Vorrichtung (101, 301, 401) zum Bestimmen eines Betriebszustands einer Maschine (103), wobei die mobile Vorrichtung (101, 301, 401) umfasst:
einen Sensor (407), der zum Messen eines Signals (103) ausgelegt ist;
einen Prozessor (403), der so ausgelegt ist, dass er einen Typ einer Maschine (103) identifiziert, einen angepassten maschinell erlernten Klassifikator, der auf der mobilen Vorrichtung (101, 301, 401) lokal gespeichert ist, basierend auf dem Typ der Maschine (103) auswählt und den Betriebszustand der Maschine (103) basierend auf der Anwendung des gemessenen Signals auf den angepassten maschinell erlernten Klassifikator ohne Verbindung zu einem Remote-Computer erzeugt;
einen Speicher (409), der den angepassten maschinell erlernten Klassifikator darauf gespeichert aufweist, wobei der angepasste maschinell erlernte Klassifikator bei einer Mehrzahl von Maschinensignalen und assoziierten Betriebszuständen erlernt wird; und
eine Benutzerschnittstelle (411), die zum Ausgeben des Betriebszustands der Maschine (103) ausgelegt ist,
wobei der Prozessor (403) ferner so ausgelegt ist, dass er das gemessene Signal und den Betriebszustand der Maschine an den Remote-Computer sendet und einen aktualisierten maschinell erlernten Klassifikator empfängt, der im Remote-Computer am gemessenen Signal und dem Betriebszustand der Maschine (103) trainiert wurde,
wobei der Prozessor (403) zum Erzeugen des Betriebszustands der Maschine (103) in Echtzeit ausgelegt ist.

9. Mobile Vorrichtung (101, 301, 401) nach Anspruch 8, ferner umfassend:
eine Anweisungsbibliothek, die zum Bereitstellen einer oder mehrerer Anweisungen zum Übergehen vom Betriebszustand der Maschine (103) in einen geänderten Zustand ausgelegt ist, wobei die Benutzerschnittstelle ferner zum Ausgeben der einen oder der mehreren Anweisungen ausgelegt ist.

10. Mobile Vorrichtung (101, 301, 401) nach Anspruch 9,
wobei der Sensor (407) ferner zum Messen eines zweiten Signals der Maschine (103) ausgelegt ist,
wobei der angepasste maschinell erlernte Klassifikator ferner zum Erzeugen eines zweiten Betriebszustands der Maschine (103) basierend auf dem zweiten Signal ausgelegt ist,
wobei der geänderte Zustand ein Normalbetriebszustand der Maschine (103) ist, und
wobei der Prozessor zum Vergleichen des zweiten Betriebszustands mit dem geänderten Zustand ausgelegt ist.

11. Mobile Vorrichtung (101, 301, 401) nach Anspruch 8, ferner umfassend:
eine Positionsschaltungsanordnung (413), die zum Bestimmen einer Position der mobilen Vorrichtung (101, 301, 401) ausgelegt ist, wobei die Position der mobilen Vorrichtung (101, 301, 401) als eine eindeutige Kennung der Maschine (103) verwendet wird.

12. Mobile Vorrichtung (101, 301, 401) nach Anspruch 8,
wobei der Prozessor (403) zum Vergleichen eines Eignungsindikators, der eine Ähnlichkeit oder einen Unterschied zwischen dem Signal der Maschine (103) und einem historischen Signal der Maschine (103) angibt, mit einem Schwellenwert ausgelegt ist, und
wobei die Benutzerschnittstelle (411) zum Ausgeben einer Warnung basierend auf dem Vergleich ausgelegt ist.

## Revendications

1. Procédé de détermination d'un état de fonctionnement d'une machine (103), le procédé comprenant :
la mesure, avec un dispositif mobile (101, 301, 401), d'un signal de la machine (103) ;
l'identification, par le dispositif mobile (101, 301, 401), d'un type de la machine (103) ;
la sélection, par le dispositif mobile (101, 301, 401), d'un classificateur adapté formé par apprentissage automatique parmi une pluralité de classificateurs formés par apprentissage automatique stockés localement sur le dispositif mobile (101, 301, 401), en fonction du type de la machine (103) ;
l'application (S103), par un processeur du dispositif mobile (101, 301, 401), du signal mesuré au classificateur adapté formé par apprentissage automatique sur une pluralité de signaux de la machine et d'états de fonctionnement associés ;
la génération (S105), par le processeur du dispositif mobile (101, 301, 401), de l'état de fonctionnement de la machine (103) en fonction de l'application du signal mesuré au classificateur adapté formé par apprentissage automatique sans connexion à un ordinateur distant ;
la délivrance, par le dispositif mobile (101, 301, 401), de l'état de fonctionnement de la machine (103) ;
l'envoi, par le processeur du dispositif mobile (101, 301, 401), du signal mesuré et de l'état de fonctionnement de la machine à l'ordinateur distant ; et
la réception, par le processeur du dispositif mobile (101, 301, 401), d'un classificateur mis à jour formé par apprentissage automatique formé dans l'ordinateur distant sur le signal mesuré et l'état de fonctionnement de la machine (103),
dans lequel le processeur du dispositif mobile (101, 301, 401) réalise l'application et la génération en temps réel.

2. Procédé selon la revendication 1, dans lequel le signal est mesuré par un microphone, un accéléromètre, un magnétomètre, un thermomètre, une caméra thermique, ou une caméra du dispositif mobile (101, 301, 401).

3. Procédé selon la revendication 1, dans lequel le signal comprend une mesure de son, une mesure de vibrations, une mesure de champ magnétique, une mesure de température, ou une image de la machine (103).

4. Procédé selon la revendication 1, comprenant en outre :
la génération, par le dispositif mobile (101, 301, 401), d'une ou plusieurs instructions de passage de l'état de fonctionnement de la machine (103) à un état modifié ; et
la délivrance, par le dispositif mobile (101, 301, 401), des une ou plusieurs instructions.

5. Procédé selon la revendication 4, comprenant en outre :
la mesure, par le dispositif mobile (101, 301, 401), d'un deuxième signal de la machine (103) ;
l'application, par le processeur du dispositif mobile (101, 301, 401), du deuxième signal au classificateur adapté formé par apprentissage automatique ;
la génération, par le processeur du dispositif mobile (101, 301, 401), d'un deuxième état de fonctionnement de la machine en fonction de l'application du deuxième signal au classificateur adapté formé par apprentissage automatique ;
la comparaison, par le dispositif mobile (101, 301, 401), du deuxième état de fonctionnement à l'état modifié ; et
la mesure, avec le dispositif mobile (101, 301, 401), d'un troisième signal de la machine lorsque le deuxième état de fonctionnement ne correspond pas à l'état modifié, l'état modifié étant un état de fonctionnement normal de la machine (103) .

6. Procédé selon la revendication 1, dans lequel une position du dispositif mobile (101, 301, 401) déterminée par un circuit de position (413) du dispositif mobile (101, 301, 401) sert d'identifiant unique de la machine (103).

7. Procédé selon la revendication 1, comprenant en outre :
la comparaison, par le processeur du dispositif mobile (101, 301, 401), d'un indicateur d'aptitude indiquant une similarité ou une différence entre le signal de la machine (103) et un signal historique de la machine (103) relativement à une valeur seuil, et
la délivrance, par le processeur du dispositif mobile (101, 301, 401), d'une alerte en fonction de l'indicateur d'aptitude lorsque l'indicateur d'aptitude dépasse la valeur seuil.

8. Dispositif mobile (101, 301, 401) de détermination de l'état de fonctionnement d'une machine (103), le dispositif mobile (101, 301, 401) comprenant :
un capteur (407) configuré pour mesurer un signal de la machine (103) ;
un processeur (403) configuré pour identifier un type de la machine (103), sélectionner un classificateur adapté formé par apprentissage automatique parmi une pluralité de classificateurs formés par apprentissage automatique stockés localement sur le dispositif mobile (101, 301, 401), en fonction du type de la machine (103) et générer l'état de fonctionnement de la machine (103) en fonction de l'application du signal mesuré au classificateur adapté formé par apprentissage automatique sans connexion à un ordinateur distant ;
une mémoire (409) sur laquelle est stocké le classificateur adapté formé par apprentissage automatique,
le classificateur adapté formé par apprentissage automatique étant formé sur une pluralité de signaux de machine et d'états de fonctionnement associés ; et
une interface utilisateur (411) configurée pour délivrer l'état de fonctionnement de la machine (103),
dans lequel le processeur (403) est configuré en outre pour envoyer le signal mesuré et l'état de fonctionnement de la machine à l'ordinateur distant ; et recevoir un classificateur machine mis à jour formé par apprentissage automatique formé dans l'ordinateur distant sur le signal mesuré et l'état de fonctionnement de la machine (103),
dans lequel le processeur (403) est configuré pour générer l'état de fonctionnement de la machine (103) en temps réel.

9. Dispositif mobile (101, 301, 401) selon la revendication 8, comprenant en outre :
une bibliothèque d'instructions configurée pour fournir une ou plusieurs instructions de passage de l'état de fonctionnement de la machine (103) à un état modifié, dans lequel l'interface utilisateur est configurée en outre pour délivrer les une ou plusieurs instructions.

10. Dispositif mobile (101, 301, 401) selon la revendication 9,
dans lequel le capteur (407) est configuré en outre pour mesurer un deuxième signal de la machine (103),
dans lequel le classificateur adapté formé par apprentissage automatique est en outre configuré pour générer un deuxième état de fonctionnement de la machine (103) en fonction du deuxième signal,
dans lequel l'état modifié est un état de fonctionnement normal de la machine (103), et
dans lequel le processeur est configuré pour comparer le deuxième état de fonctionnement à l'état modifié.

11. Dispositif mobile (101, 301, 401) selon la revendication 8, comprenant en outre :
des circuits de position (413) configurés pour déterminer la position du dispositif mobile (101, 301, 401), la position du dispositif mobile (101, 301, 401) servant d'identifiant unique de la machine (103).

12. Dispositif mobile (101, 301, 401) selon la revendication 8,
dans lequel le processeur (403) est configuré pour comparer un indicateur d'aptitude indiquant une similitude ou une différence entre la signature de la machine (103) et un signal historique de la machine (103) relativement à un seuil, et
dans lequel l'interface utilisateur (411) est configurée pour délivrer une alerte en fonction de la comparaison.
